# EUROPÄISCHE PATENTSCHRIFT

(11) **EP 0 512 261 B1**
(45) Veröffentlichungstag und Bekanntmachung des Hinweises auf die Patenterteilung: **01.03.1995**
(21) Anmeldenummer: 92105888.9
(22) Anmeldetag: 06.04.1992
(51) Int. Cl.: B65G 27/32

(54) **Schwingzuführgerät**
Vibratory feeding apparatus
Appareil d'alimentation vibrant

(30) Priorität: 09.04.1991 DE 4111371; 18.04.1991 DE 4112657
(43) Veröffentlichungstag der Anmeldung: 11.11.1992
(73) Patentinhaber: Feldpausch, Hugo, D-58507 Lüdenscheid (DE)
(72) Erfinder: Feldpausch, Hugo, D-58507 Lüdenscheid (DE)
(74) Vertreter: Hassler, Werner, Dr.

(56) Entgegenhaltungen:
- DE-A- 2 015 095
- DE-A- 2 913 962
- DE-U- 1 909 584
- US-A- 2 941 658
- US-A- 3 964 600
- PATENT ABSTRACTS OF JAPAN vol. 8, no. 136 (M-304)(1573) 23. Juni 1984

## Beschreibung

Die Erfindung betrifft ein Schwingzuführgerät mit einem als Gegengewicht dienenden Träger (C) und einem Werkstückfördertopf (14), der über Blattfedern (12) elastisch mit dem Träger verbunden ist.

Ein derartiges Schwingzuführgerät nach der DE-B-29 13 962 dient zum Ordnen von Werkstücken, die in einem Werkstückfördertopf aus einem Vorrat über Führungsbahnen sowie Leitelemente und Ordnungselemente gefördert werden. Der Werkstückfördertopf bildet die Schwingmasse, die mit Hilfe von Blattfedern an einem als Gegengewicht dienenden Träger gehalten ist, so daß man einen mechanischen Schwingkreis erhält. Die Blattfedern dienen einerseits zum Tragen des Werkstückfördertopfes und andererseits zur Bereitstellung der Rückstellkraft. Außerdem muß über die Blattfedern auch eine vertikale Schwingkomponente erzeugt werden, die zur Bewegung der Werkstücke erforderlich ist.

Dieses System ist kaum anpaßbar. Da die Eigenschwingungen dieses mechanischen Schwingkreises für die Laufeigenschaften der Werkstücke sehr wichtig sind, muß die Eigenschwingung jeweils an die Werkstücke und an die Ordnungselemente, insbesondere deren Masse, angepaßt werden. Die Blattfedern haben große Toleranzen. Außerdem können Brüche durch Überlastung und durch Kerbwirkung auftreten. Diese Anpassung und Neueinstellung der Federsätze ist vielfach aufwendig.

Das DE-U-1 909 584 beschreibt einen Schwingförderer mit zwei Rückstellfedern, deren Vorspannung wechselweise veränderbar ist. Dadurch erreicht man eine Verschiebung des Arbeitspunktes auf dem Progressionsabschnitt der Federkennlinie.

Ein Schwingförderer nach der DE-A-2 015 095 arbeitet ebenfalls mit Rückstellfedern, deren Steifigkeit individuell einstellbar ist.

Aufgabe der Erfindung ist die Bereitstellung eines anpassungs- und wandlungsfähigen Schwingsystems mit einstellbarer Eigenfrequenz.

Diese Aufgabe wird nach der Erfindung dadurch gelöst, daß zusätzlich zu den Blattfedern Rückstellelemente mit jeweils zwei auf einem Kern sitzende Schraubenfedern mit einstellbarer freier Federlänge vorhanden sind.

Die Erfindung unterscheidet sich insofern vom Stand der Technik, als besondere Rückstellelemente mit einstellbarer freier Federlänge vorgesehen sind. Die Federsteifigkeit wird hierbei nicht verändert. Durch Änderung der Federlänge ändert man die Rückstellkraft und damit die Eigenfrequenz. Schraubenfedern haben ein enges Toleranzfeld und eine große Lebensdauer. Der runde Federstahldraht hat eine hohe Qualität und ist frei von Kerben. Auf kleinem Raum läßt sich eine große Federlänge anordnen, so daß man einen hohen Sicherheitsfaktor hat.

Die Halterung des Kerns und die Kopplung mit dem Träger erfolgt dadurch, daß der Kern in einem mit dem Träger verbundenen Rahmen sitzt und daß Umbiegungen der freien Federenden an dem Werkstückfördertopf angekoppelt sind.

Eine symmetrische Schwingung wird dadurch sichergestellt, daß der Kern zwei drehfest miteinander gekoppelte Bolzen mit gegenläufigen Gewindeabschnitten umfaßt und daß jeder Gewindeabschnitt in eine Schraubenfeder entsprechender Steigung eingreift.

Eine Verstellbarkeit der Bolzen in axialer Richtung und eine Drehbarkeit in Umfangsrichtung wird dadurch ermöglicht, daß die Bolzen in klemmbaren Führungen des Rahmens aufgenommen sind.

Zur Verschiebbarkeit der Bolzen gegeneinander ist vorgesehen, daß die Bolzen durch ein in Längsschlitze eingreifendes Schwert gekoppelt sind.

Ausführungsbeispiele der Erfindung werden im Folgenden unter Bezugnahme auf die anliegenden Zeichnungen erläutert, in denen darstellen:

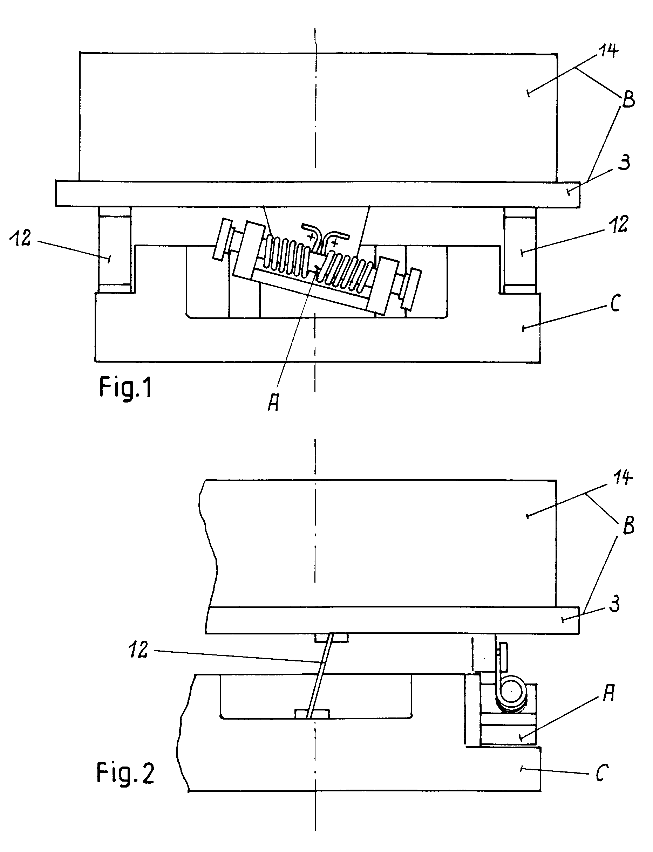

- Fig. 1: eine Ansicht eines Schwingzuführgerätes,
- Fig. 2: eine Seitenansicht zur Fig. 1 und
- Fig. 3: eine Einzeldarstellung in Ansicht und Draufsicht eines Rückstellelementes.

Das Schwingzuführgerät umfaßt einen als Gegengewicht dienenden Träger C sowie eine schwingende Masse B. Die schwingende Masse B umfaßt einen Schwingring 3 und einen Werkstückfördertopf 14. Der Träger C und die Masse B sind durch Blattfedern 12 sowie Federn der Rückstellelemente A gekoppelt. Die Blattfedern 12 tragen den Schwingring 3 und dienen auch zur Erzeugung einer vertikalen Bewegungskomponente für die Bewegung der Werkstücke. Die Rückstellelemente A sind als Federelemente mit einstellbarer Federsteifigkeit aufgebaut.

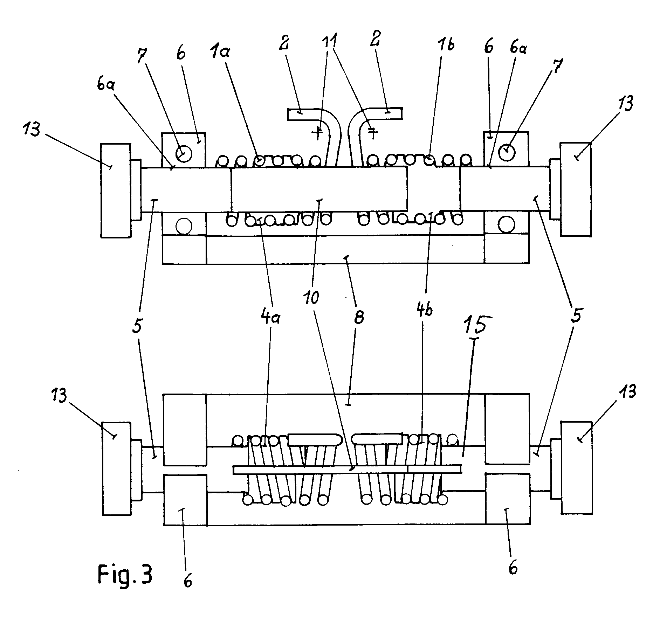

Im Einzelnen umfaßt jedes Rückstellelement A gemäß Fig. 3 einen Rahmen 8 mit Klemmbacken 6, die klemmbare Führungen 6a bilden. Die Klemmbacken 6 können mit Hilfe von Spannschrauben 7 zusammengespannt werden. Innerhalb der Klemmbacken 6 sind jeweils Bolzen 5 geführt, die jeweils einen Gewindeabschnitt 4a beziehungsweise 4b aufweisen. Die Gewindeabschnitte 4a und 4b der beiden Bolzen 5 sind mit gegensinniger Steigung ausgebildet. Außerdem ist in einem Längsschlitz 15 ein stegförmiges Schwert 10 geführt.

Auf jeden Bolzen 5 ist eine Schraubenfeder 1a beziehungsweise 1b gewickelt. Die Schraubenfedern 1a und 1b haben eine gegensinnige Windung entsprechend der gegensinnigen Steigung der Gewindeabschnitte 4a und 4b. Das freie Federende endet in eine hakenförmige Umbiegung 2. Diese Umbiegungen 2 sind in Koppelelemente 11 am Schwingring 3 eingehängt. Andererseits ist der Rahmen 8 an dem Träger C befestigt. Die Bolzen 5 enden jeweils in einem Einstellrad 13.

Die beiden Schraubenfedern 1a und 1b sind auf die jeweiligen Bolzen 5 beziehungsweise die Gewindeabschnitte 4a und 4b gewickelt. Für das Schwingungsverhalten ist das freie Federende maßgebend, das in eine Umbiegung 2 endet. Die freie Federlänge beider Schraubenfedern ist gleich groß, so daß sich ein symmetrisches Schwingungsverhalten ergibt.

Die freie Federlänge ist jederzeit in einfacher Weise einstellbar. Hierzu werden die Spannschrauben 7 der Klemmbacken 6 gelöst, so daß man die Bolzen 5 an den Handeinstellrädern 13 drehen kann. Bei dieser Drehung verschrauben sich die Gewindeabschnitte 4a und 4b innerhalb der Schraubenfedern 1a und 1b, so daß je nach der Drehrichtung die freie Federlänge größer oder kleiner wird. Die Bolzen 5 bewegen sich dabei gegeneinander in axialer Richtung. Diese Axialverschiebung wird durch das Schwert 10 ermöglicht, das andererseits eine drehfeste Kopplung sicherstellt.

So läßt sich in einfacher Weise die freie Federlänge und damit die Federsteifigkeit einstellen. Entsprechend läßt sich auch die Eigenfrequenz des Schwingkreises einstellen.

Sowohl die Blattfedern 12 als auch die Rückstellelemente A kann man an einem Schwingzuführgerät in der erforderlichen Anzahl einsetzen.

## Patentansprüche

1. Schwingzuführgerät mit einem als Gegengewicht dienenden Träger (C) und einem Werkstückfördertopf (14), der über Blattfedern (12) elastisch mit dem Träger verbunden ist, dadurch gekennzeichnet, daß zusätzlich zu den Blattfedern (12) Rückstellelemente (A) mit jeweils zwei auf einem Kern sitzende Schraubenfedern (1a, 1b) mit einstellbarer freier Federlänge vorhanden sind.

2. Schwingzuführgerät nach Anspruch 1, dadurch gekennzeichnet, daß der Kern in einem mit dem Träger (C) verbundenen Rahmen (8) sitzt und daß Umbiegungen (2) der freien Federenden an dem Werkstückfördertopf (14) angekoppelt sind.

3. Schwingzuführgerät nach Anspruch 1 oder 2, dadurch gekennzeichnet, daß der Kern zwei drehfest miteinander gekoppelte Bolzen (5) mit gegenläufigen Gewindeabschnitten (4a, 4b) umfaßt und daß jeder Gewindeabschnitt in eine Schraubenfeder (1a, 1b) entsprechender Steigung eingreift.

4. Schwingzuführgerät nach Anspruch 3, dadurch gekennzeichnet, daß die Bolzen (5) in klemmbaren Führungen (6) des Rahmens (8) aufgenommen sind.

5. Schwingzuführgerät nach Anspruch 3 oder 4, dadurch gekennzeichnet, daß die Bolzen (5) durch ein in Längsschlitze (15) eingreifendes Schwert (10) gekoppelt sind.

## Claims

1. Vibratory feeding device, having a support (C), serving as a counterweight, and a workpiece conveying pot (14) which is resiliently connected to the support by way of leaf springs (12), characterized in that in addition to the leaf springs (12) restoring elements (A) each having two helical springs (1a, 1b) which are seated on a core and which have adjustable free spring length are present.

2. Vibratory feeding device according to Claim 1, characterized in that the core is seated in a frame (8) connected to the support (C), and in that bent-round parts (2) of the free spring ends are coupled to the workpiece conveying pot (14).

3. Vibratory feeding device according to Claim 1 or 2, characterized in that the core comprises two pins (5) which are non-rotatably coupled to one another and which have threaded portions (4a, 4b) running in opposite directions, and in that each threaded portion engages in a helical spring (1a, 1b) of corresponding pitch.

4. Vibratory feeding device according to Claim 3, characterized in that the pins (5) are received in clampable guides (6) of the frame (8).

5. Vibratory feeding device according to Claim 3 or 4, characterized in that the pins (5) are coupled by means of a strut (10) which engages in longitudinal slots (15).

## Revendications

1. Appareil d'alimentation vibrant comprenant un support (C) servant de contrepoids et un pot de transport de pièces d'usinage (14), qui est relié de manière élastique au support par l'intermédiaire de ressorts à lame (12), caractérisé en ce que, en plus des ressorts à lame (12), il est prévu des éléments de rappel (A) comprenant chacun deux ressorts hélicoïdaux (1a, 1b) situés sur un noyau et présentant une longueur de ressort libre, ajustable.

2. Appareil d'alimentation vibrant suivant la revendication 1, caractérisé en ce que le noyau se trouve dans un cadre (8) qui est relié au support (C) et en ce que des parties repliées (2) des extrémités libres des ressorts sont accouplées au pot de transport de pièces d'usinage (14).

3. Appareil d'alimentation vibrant suivant l'une des revendications 1 et 2, caractérisé en ce que le noyau comporte deux boulons (5) mutuellement couplés de manière fixe en rotation et présentant des sections filetées en sens opposés (4a, 4b) et en ce que chaque section filetée pénètre dans un ressort hélicoïdal (1a, 1b) de pas correspondant.

4. Appareil d'alimentation vibrant suivant la revendication 3, caractérisé en ce que les boulons (5) sont logés dans des guidages pinçables (6) du cadre (8).

5. Appareil d'alimentation vibrant suivant l'une des revendications 3 et 4, caractérisé en ce que les boulons (5) sont couplés par une lame (10) qui pénètre dans des fentes longitudinales (15).
